# EUROPEAN PATENT SPECIFICATION

(11) **EP 0 742 391 B1**
(45) Date of publication and mention of the grant of the patent: **21.10.1998**
(21) Application number: 96107404.4
(22) Date of filing: 09.05.1996
(51) Int. Cl.: F16H 61/06

(54) **Control system for an automatic transmission**
Steuereinrichtung für ein automatisches Getriebe
Dispositif de commande pour une transmission automatique

(30) Priority: 12.05.1995 JP 138378/95
(43) Date of publication of application: 13.11.1996
(73) Proprietor: AISIN AW CO., LTD., Anjo-shi Aichi-ken 444-11 (JP)
(72) Inventor: Tsutsui, Hiroshi, Anjo-shi, Aichi-ken, 444-11 (JP); Hayabuchi, Masahiro, Anjo-shi, Aichi-ken, 444-11 (JP); Nishida, Masaaki, Anjo-shi, Aichi-ken, 444-11 (JP); Yamamoto, Yoshihisa, Anjo-shi, Aichi-ken, 444-11 (JP)
(74) Representative: VOSSIUS & PARTNER

(56) References cited:
- EP-A- 0 627 580
- US-A- 4 947 330
- US-A- 5 301 572
- US-A- 5 343 782
- PATENT ABSTRACTS OF JAPAN vol. 017, no. 407 (M-1454), 29 July 1993 & JP-A-05 079562 (TOYOTA MOTOR CORP), 30 March 1993,

## Description

The present invention relates to a control system for an automatic transmission and, more particularly, to a control system for controlling the application and release of an input clutch for transmitting the rotation of an engine to a transmission mechanism.

The automatic transmission is equipped with the input clutch for transmitting the rotation of the engine to the transmission mechanism. This clutch is applied when the automatic transmission is switched from a neutral range to a forward running range (or drive range). In the case of a vehicle stop state in which the forward running range is selected, a power loss preventing control, as called the "neutral control", is effected by holding the input clutch in a released state immediately before applied, that is, in the standby state in which the piston of the hydraulic servo for applying/releasing the input clutch has substantially ended its stroke, to block the transmission of the power to the transmission mechanism thereby to lighten the engine load.

For this control, a technique (i.e., Prior Art 1) is disclosed in Japanese Patent Laid-Open No. 21458/ 1986 (JP-A-61 021 458). When a starting operation by the driver is detected, the confirmation of the application start of the input clutch is awaited while feeding a predetermined initial oil pressure higher than the oil pressure being fed to the hydraulic servo at this time, and the oil pressure is gradually raised after the confirmation of the application start from the oil pressure at this time to end the application of the input clutch. In this technique, the reason why the predetermined initial oil pressure is fed is as follows. When the input clutch is in its released state immediately before applied, the piston of the hydraulic servo stands still in the state, in which it is slightly retracted from the position of completely applied state. If the clutch is to be applied from this state, the piston is subject to a starting resistance according to the coefficient of static friction at its starting time. This starting resistance is not effective when the piston comes into the applied state directly from the end of the stroke. As a result, the piston does not start its sliding motion from the neutral control state unless the oil pressure is raised to some extent higher than the pressure fed at the normal clutch application starting time. From these circumstances, the time period required for ending the application of the input clutch is elongated, because the application is not started till the oil pressure can cope with the aforementioned starting resistance if it is merely gradually raised, as customary. According to Prior Art 1, therefore, the time period for the application is shortened within a range of causing no application shock by feeding such an initial oil pressure as to move the piston against the starting resistance to establish the piston stroke thereby to start the application of the clutch without rail and then by raising the oil pressure gradually.

Another technique (i.e., Prior Art 2) is disclosed in Japanese Patent Laid-Open No. 79562/1993 (JP-A-5 079 562) for the release control by which the input clutch is brought into the neutral control state. According to this technique, in order to prevent the shock which is caused by releasing the input clutch, there is adopted a control method by which preparations are made for the restart by lowering the oil pressure to be fed to the hydraulic servo, gradually on the basis of predetermined falling characteristics to release the clutch and by maintaining a predetermined oil pressure when the piston returns to a state immediately before the application.

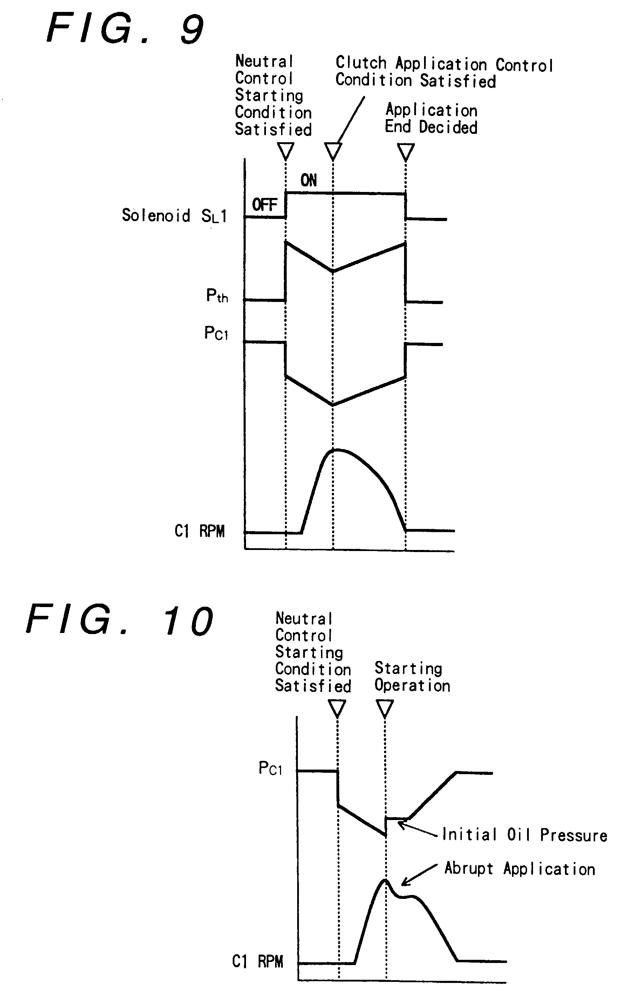

Incidentally, Prior Art 1 is effective for the control by which the input clutch is applied from a predetermined clutch released state under the neutral control, and Prior Art 2 is effective for the control by which the input clutch in the applied state is brought into the predetermined clutch released state under the neutral control. However, the following problem is caused by applying the clutch according to the control method of Prior Art 1 if the starting operation is performed in the course of the release of the clutch according to the control method of Prior Art 2. Specifically, if the application control by the detection of the starting operation is performed when an input clutch C1 substantially reaches the released state in the course of gradually lowering the oil pressure (P_{C1}) to be fed to the hydraulic servo at the start of the neutral (N) control, as illustrated in the time chart of Fig. 10, the oil pressure (P_{C1}) to the hydraulic servo is abruptly raised to the aforementioned predetermined initial oil pressure so that the piston of the hydraulic servo loads an intense application returning force upon the clutch without no substantial stroke. As a result, the clutch is abruptly applied to cause the application shock by the initial oil pressure which is raised from the oil pressure to be intrinsically fed at this time.

The present invention has been conceived in view of the background described above and has a first object to provide a control system for an automatic transmission, which is enabled to effect a shock-free application of an input clutch by applying the clutch properly at the starting time in accordance with the released state of the clutch.

Next, the present invention has a second object to shorten the application time and prevent the application shock by applying the oil pressure after the predetermined application state of the input clutch has been confirmed at the time of feeding the initial application oil pressure.

Moreover, the present invention has a third object to control the application time and the application shock stably independently of the fluctuation of the input torque to the clutch by detecting the input torque, i.e., the output torque from the engine.

Next, the present invention has a fourth object to shorten the application time period for the start by bringing the clutch into a predetermined released state, in which the piston starts its retraction, that is, immediately before the clutch starts its engagement.

In order to solve the above-specified problems, according to a first aspect of the present invention, there is provided a control system for an automatic transmission comprising: an input clutch adapted to be applied, when a forward running range is selected, to transmit the rotation of an engine to a transmission mechanism; a hydraulic servo for applying/releasing the input clutch selectively; stop state detecting means for detecting the stop state of a vehicle in terms of the selection of the forward running range, no vehicle speed, the release of an accelerator pedal and the depression of a brake pedal; starting operation detecting means for detecting a starting operation; application state detecting means for detecting the application state of the input clutch; and control means for controlling an oil pressure to be fed to the hydraulic servo on the basis of signals coming from the stop state detecting means, the starting operation detecting means and the application state detecting means, characterized in that the control means includes: release means for feeding, if the stop state of the vehicle is detected the stop state detecting means, such a release oil pressure to the hydraulic servo as to lower the oil pressure of the hydraulic servo gradually thereby to release the input clutch gradually and then to hold a predetermined released state; decide means for deciding, if the starting operation of the vehicle is detected by the starting operation detecting means, whether or not the release of the input clutch has arrived at such a specific released state or standby state that the piston of the hydraulic servo starts its retraction, on the basis of the signal detected by the application state detecting means; and apply means for feeding, if the decide means decides the arrival at the specific released state, the hydraulic servo with the oil pressure, which is prepared by adding an initial application oil pressure at an level for the piston of the hydraulic servo to slide to start the engagement of the input clutch to the release oil pressure, and then raising an oil pressure gradually from the summed oil pressure, and for raising, if the decide means decides a failure in the arrival at the specific released state, the oil pressure gradually from the oil pressure, which is fed to the hydraulic servo when the starting operation is detected, on the basis of the predetermined rising characteristics.

According to a second aspect of the present invention, moreover, there is adopted a construction, wherein the apply means feeds, if the decide means decides the arrival at the specific released state, the summed oil pressure which is prepared by adding the initial application oil pressure for the piston of the hydraulic servo to slide thereby to start the application of the clutch, to the release oil pressure, and raises the oil pressure gradually from the initial application oil pressure on the basis of the predetermined rising characteristics, after such a predetermined application state for the piston of the hydraulic servo to slide thereby to start the application of the clutch has been detected on the basis of the signal detected by the application state detecting means.

According to a third aspect of the present invention, moreover, there is adopted a construction, wherein the control means includes torque detecting means for detecting the output torque of the engine, and wherein the apply means raises the oil pressure gradually according to the predetermined rising characteristics based upon the torque detected by the torque detecting means.

According to a fourth aspect of the present invention, moreover, there is adopted a construction, wherein the release means lowers the oil pressure of the hydraulic servo gradually to release the clutch gradually, if the stop state of the vehicle is detected on the basis of the signal coming from the stop state detecting means, and then feeds the hydraulic servo with the release oil pressure capable of holding the predetermined released state for the piston of the hydraulic servo to start its retraction.

The present invention will be described in the following in connection with its embodiment with reference to the accompanying drawings.
Fig. 1 is a block diagram showing an embodiment of the present invention conceptionally;
Fig. 2 is a block diagram a skeleton of only a mechanism portion of the entire construction of an automatic transmission according to the embodiment;
Fig. 3 is an operation table of the automatic transmission;
Fig. 4 is a circuit diagram of a portion of a hydraulic control unit of the automatic transmission;
Fig. 5 is a main flow chart showing a routine of a control unit of the embodiment;
Fig. 6 is a flow chart showing a sub-routine of the control unit of the embodiment;
Fig. 7 is a characteristic diagram illustrating a setting of an initial application pressure of the embodiment;
Fig. 8 is a time chart illustrating one release application procedure by the control unit of the embodiment;
Fig. 9 is a time chart illustrating the other release application procedure by the control unit of the embodiment; and
Fig. 10 is a characteristic diagram of a feed oil pressure obtained by the control unit of an automatic transmission of the prior art.

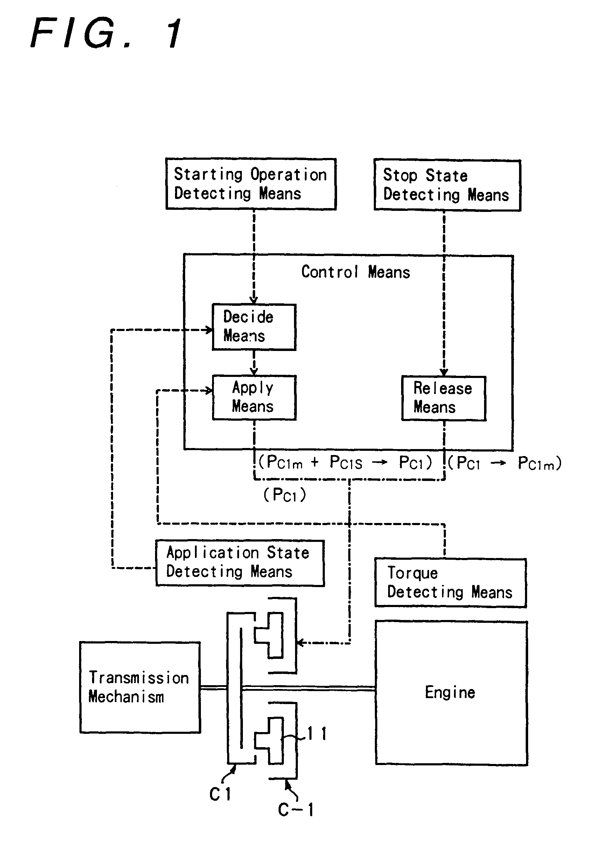

Fig. 1 shows an embodiment of the present invention conceptionally in a block form. This control system for an automatic transmission is provided with: an input clutch C1 adapted to be applied, when a forward running range is selected, to transmit the rotation of an engine to a transmission mechanism; a hydraulic servo C-1 for applying/releasing the input clutch C1 selectively; stop state detecting means for detecting the stop state of a vehicle in terms of the selection of the forward running range, no vehicle speed, the release of an accelerator pedal and the depression of a brake pedal; starting operation detecting means for detecting a starting operation; application state detecting means for detecting the application state of the input clutch C1; and control means for controlling an oil pressure to be fed to the hydraulic servo C-1 on the basis of signals coming from the stop state detecting means, the starting operation detecting means and the application state detecting means.

The control means is provided with: release means for feeding, if the stop state of the vehicle is detected by the stop state detecting means, such a release oil pressure (P_{C1m}) to the hydraulic servo C-1 as to lower the oil pressure of the hydraulic servo C1 gradually thereby to release the input clutch C1 gradually and then hold a predetermined released state; decide means for deciding, if the starting operation of the vehicle is detected by the starting operation detecting means, whether or not the release of the input clutch C1 has arrived at such a specific released state or standby state that the piston 11 of the hydraulic servo C-1 starts its retraction, on the basis of the signal detected by the application state detecting means; and apply means for feeding, if the decide means decides the arrival at the specific released state, the hydraulic servo C-1 with the oil pressure, which is prepared by adding an initial application oil pressure (ΔP_{C1S}) at an level for the piston of the hydraulic servo C-1 to slide to start the engagement of the input clutch C1 to the release oil pressure (P_{C1m}), and then raising an oil pressure (P_{C1}) gradually from the summed oil pressure, and for raising, if the decide means decides a failure in the arrival at the specific released state, the oil pressure (P_{C1}) gradually from the oil pressure, which is fed to the hydraulic servo C-1 when the starting operation is detected, on the basis of the predetermined rising characteristics.

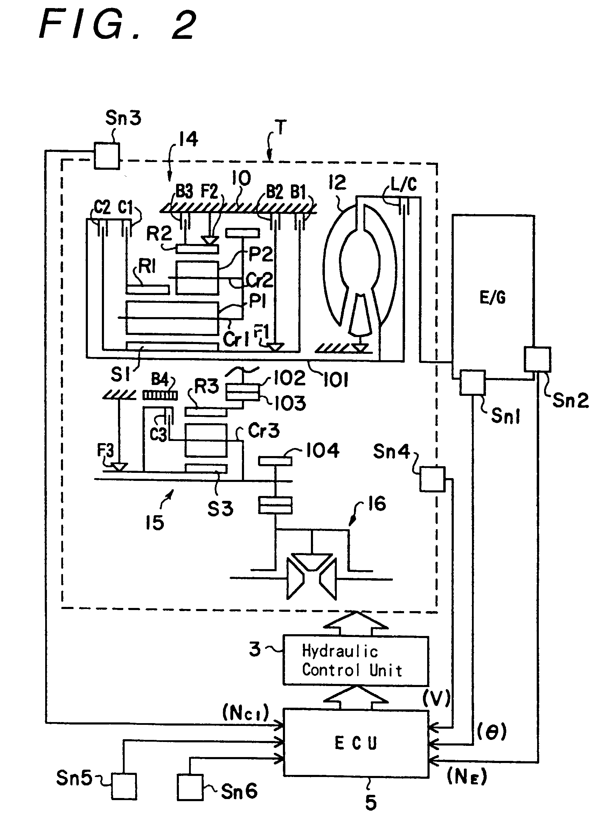

The individual portions will be described in more detail. As shown in Fig. 2, an automatic transmission T of this embodiment is equipped with a gear train having four forward speeds and one reverse speed for a front-engine front-drive car. The automatic transmission T is constructed to include: a torque converter 12 with a lockup clutch, as indicated by letters L/C; a gear train having a double axle construction composed of a main speed change unit 14 and a planetary gear unit 15 of underdrive type; a differential unit 16, a hydraulic control unit 3 for controlling the gear train and the lockup clutch; and an electronic control unit (as abbreviated to "ECU") for controlling the hydraulic control unit 3.

In the drawing: letters E/G designate an engine; characters Sn1 a throttle sensor for detecting the throttle opening (θ) of the engine E/G to detect the release of the accelerator pedal in terms of the opening θ = 0; characters Sn2 an engine revolution sensor for detecting the RPM (N_{E}) of the engine E/G; characters Sn3 a clutch revolution sensor for detecting the RPM (N_{C1}) of the input clutch C1 of the automatic transmission T; characters Sn4 a vehicle speed sensor for detecting the vehicle speed (V) from the output RPM; characters Sn5 a neutral start switch acting as range selection detecting means for detecting the shift position; and characters Sn6 a brake switch for detecting the depression of the brake pedal. The electronic control unit 5 issues control signals the individual ON/OFF solenoid valves and a linear solenoid valve of the hydraulic control unit 3 on the basis of the data coming from the aforementioned individual sensors, i.e., mainly the vehicle speed (V) and the throttle opening (θ) and according to the packaged program.

The main speed change unit 14 of the gear train of the automatic transmission T includes a planetary gear unit of single pinion construction and a plane-tary gear unit of a double pinion construction, both of which are combined by integrating a sun gear S1, the planetary gear unit at the single pinion side and one pinion gear P1 at the double pinion side, and by connecting a carrier Cr1 supporting the pinion gear P1 and the other pinion gear P2 at the double pinion side. Moreover, the sun gear S1, as shared between the two gear units of the main speed change unit 14, can be fixed through a brake B1 on a transmission case 10 and through a one-way clutch F1 and a brake B2, as connected in series, in the same case 10. A ring gear R1 at the single pinion side is connected through the input clutch C1 or the subject matter of the present invention to an input shaft 101 connected to the turbine output of the torque converter 12, and the sun gear S1 is connected through a clutch C2 to the input shaft 101. The carrier Cr1, which supports the pinion gear P1 meshing with the sun gear S1, the ring gear R1 and the pinion gear P2, and the carrier Cr2, which supports the pinion gear P1 and the pinion gear P2 meshing with a ring gear R2, are connected to a counter gear 102. The ring gear R2 at the double pinion side can be fixed on the transmission case 10 by a one-way clutch F2.

On the other hand, a ring gear R3 of the underdrive planetary gear unit 15 is used as an input element, as connected to the main speed change unit 14 through the counter gears 102 and 103. The carrier Cr3 is connected through a clutch C3 to a sun gear S3. This sun gear S3 can be fixed on the transmission case 10 through a one-way clutch F3 and a band brake B4, as arranged in parallel. A carrier Cr3 is connected to an output gear 104 for power transmission to the differential unit 16.

In the gear train thus constructed, under the underdrive rotation in which the clutch C3 of the underdrive planetary gar unit 15 is released, in which the brake B4 is applied and in which the sun gear S3 is fixed so that the input is made to the ring gear R3 whereas the output is made from the carrier Cr3, the input to the ring gear R1 with the input clutch C1 of the main speed change unit 14 being applied is outputted as the rotations of the carriers Cr1 and Cr2 by the reaction support by the ring gear R2 with the one-way clutch F2 being applied, thus establishing the first speed. With the sun gear S1 being fixed by the application of the brake B2, the input is outputted as the rotations of the carriers Cr1 and Cr2 to establish the second speed. In the directly connected state of the main speed change unit 14 by the synchronous rotations of the ring gear R1 and the sun gear S1 by the additional application of the clutch C2, the input rotation is unchangedly outputted from the carriers Cr1 and Cr2 to establish the third speed. With the brake B4 being released but the clutch C3 being applied, moreover, the fourth speed is established by the direct connection of the underdrive planetary gear unit 15. With the clutch C2 being applied and the brake B3 being applied, the input is made to the sun gear S1, and the carrier Cr2 is rotated backward with the ring gear R2 being fixed, so that the reverse stage is established.

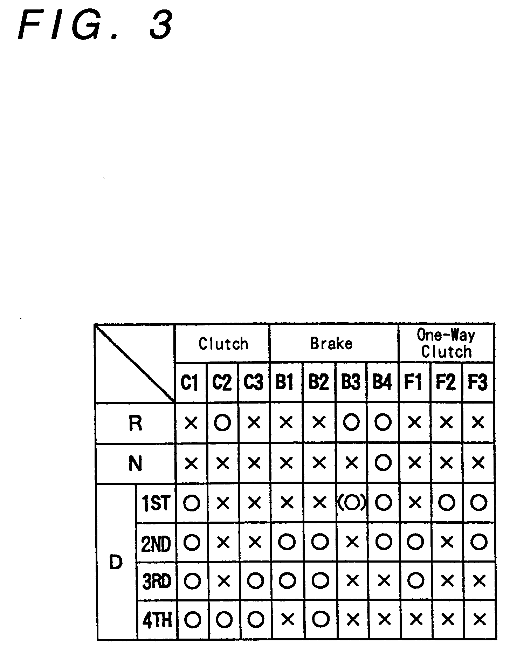

Fig. 3 tabularly compiles the relations between the operations of the aforementioned individual clutches, brakes and one-way clutches in the individual shift positions and the individual gear stages, i.e., the first speed (1ST) to the fourth speed (4TH) to be achieved by the operations. In this table: "R" indicates the reverse; "N" the neutral; "D" the individual shift positions of the drive; symbol ○ the application; symbol X the release; and (○) the application only at the engine braking time.

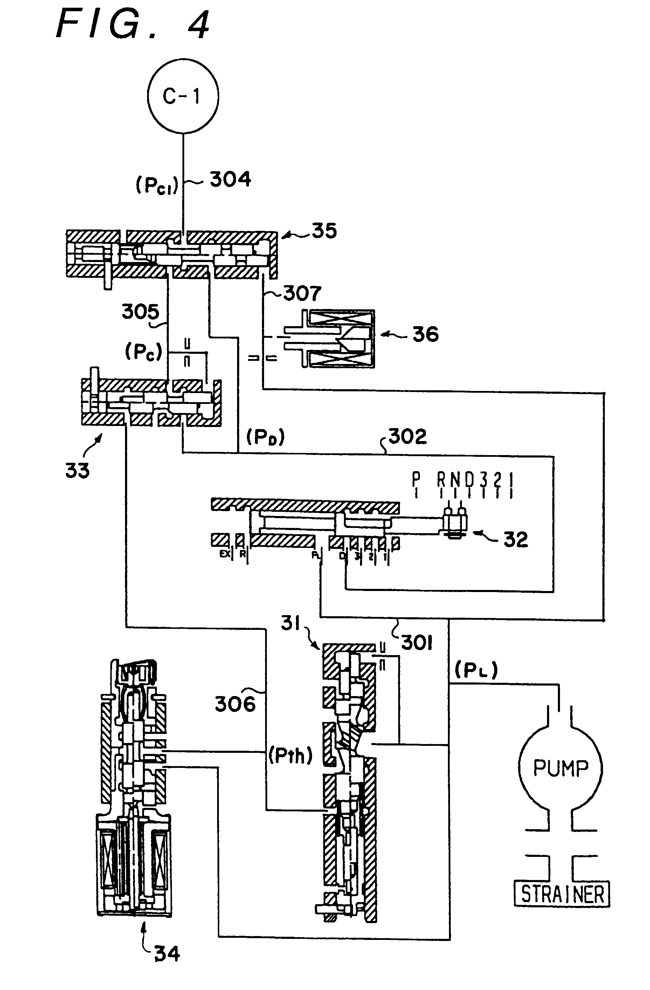

The hydraulic circuit for controlling the gear train thus constructed is equipped, as shown in Fig. 4, like the hydraulic circuit of the hydraulic control unit of the prior art, with: various pressure regulator valves such as a primary regulator valve 31 for regulating the discharge pressure of an oil pressure source or an oil pump (PUMP), as mounted in the transmission mechanism, into a predetermined stable line pressure (P_{L}) according to the vehicle speed and the throttle opening thereby to output a secondary pressure, or a (not-shown) secondary regulator valve for lowering and regulating the secondary pressure to a torque converter feed pressure and for outputting the residual pressure as a lubrication pressure; a manual valve 32, various solenoid valves; various shift valves; and check valves and orifices interposed in the oil lines connecting the foregoing various valves.

Fig. 4 shows only such a portion of the aforementioned hydraulic circuit as relates to the subject matter of the present invention. This circuit portion is equipped with the manual valve 32, a C-1 control valve 33, a linear solenoid valve 34 for controlling the control valve 33, a C-1 change-over valve 35, and a solenoid valve 36 for controlling the change-over valve 35. The manual valve 32 is connected to a line pressure feed line 301 and a range pressure output line 302 so that it may output the D-range pressure, i.e., the line pressure (P_{L}) according to the throttle opening (θ) at each time when the forward running range, i.e., the D-range is selected.

The C-1 control valve 33 is constructed as a secondary pressure actuated pressure reducing valve which is fed at the opposite spool ends with a throttle signal pressure (Pₜₕ) and the feedback pressure of a regulated oil pressure (P_{C}) thereby to adjust the degrees of opening of an output port, an input port and a drain port. Of these: the input port is connected to the range pressure line 302; the output port is connected to a regulated oil pressure output line 305; and the feedback port is connected through an orifice to the regulated oil pressure output line 305. The linear solenoid valve 34 is operated based upon the signal from the electronic control unit 5 to reduce the line pressure (P_{L}) thereby to output the throttle signal pressure (Pₜₕ), and this throttle signal pressure (Pₜₕ) is fed via the throttle signal pressure line 306 to the primary regulator valve 31 and the aforementioned C-1 control valve 33. Thus, the C-1 control valve 33 and the linear solenoid valve 34 function to regulate the line pressure (P_{L}) on the basis of the signal coming from the electronic control unit thereby to output the regulated oil pressure (P_{C}).

Next, the C-1 change-over valve 35 is a spool type change-over valve for connecting its input port leading to the regulated oil pressure output line 305 and its input port leading to the range pressure line 302, selectively to its output port, so that it is changed over when fed with the solenoid signal pressure against a spring force loaded on the spool end. The solenoid valve 36 is constructed as a normal open type ON/OFF valve which is closed when it is fed with the solenoid signal from the electronic control unit 5, thereby to drain and block the oil pressure of a solenoid signal pressure line 307 leading to the line pressure feed line 301 through the orifice. Thus, the C-1 change-over valve 35 and the solenoid valve 36 perform the function as change-over means to be selectively switched in response to the signal from the electronic control unit 5 between a position (as indicated at the lower half of the drawing), in which the line pressure (P_{L}) is fed to the hydraulic servo C-1 of the clutch C1 via a line 304, and a position (as indicated at the upper half of the drawing) in which the regulated oil pressure (P_{C}) is fed.

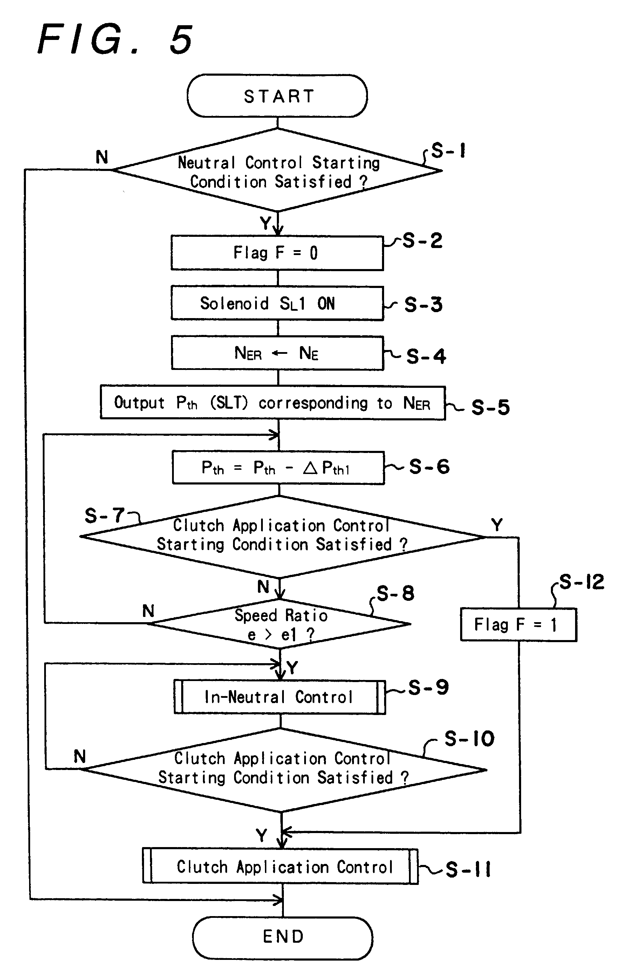

The hydraulic circuit thus constructed, as shown in Fig. 4, is controlled by the electronic control unit 5. As shown in the flow chart of Fig. 5, whether or not the condition for starting the neutral control is satisfied is decided depending upon whether or not all the following conditions are satisfied: whether or not the range position by the signal of the neutral start switch Sn5 is the D-range; whether or not the vehicle speed (V) by the signal of the vehicle speed sensor Sn4 is 0; whether or not the throttle opening (θ) by the throttle sensor Sn1 is 0; and whether or not the brake switch Sn6 is ON. If this answer is YES, a flag for changing the control mode into the neutral control is set to F = 0 at the next Step S-2. At Step S-3, a signal S_{L}1 to the solenoid valve 36 is turned ON. At this time, on the circuit shown in Fig. 4, the drain of the line 307 is closed when the signal S_{L}1 to the solenoid valve 36 is turned OFF, so that the C-1 change-over valve 35 is switched from the spool position, as shown at the lower half of the drawing, for feeding the line pressure (P_{L}) to the regulated oil pressure feeding position, i.e., the spool position, as shown at the upper half of the drawing. As a result, the regulated oil pressure output line 305 has communication with the hydraulic servo C-1 through the C-1 change-over valve 35 and the line 304 thereby to start the lowering control of the servo pressure (P_{C1}). At the next Step S-4, the present engine RPM (N_{E}) is set as the engine RPM (N_{ER}) at the control starting time. Next, at Step S-5, the signal pressure (Pₜₕ) according to the engine RPM (N_{ER}) from the linear solenoid valve 34 is outputted to the C-1 control valve 33 so that the C-1 control valve 33 is brought into the control state of the regulated oil pressure (P_{C}) according to the signal pressure (Pₜₕ). At Step S-6, the drop of the signal pressure (Pₜₕ) for lowering the servo pressure (P_{C1}) at a predetermined gradient is controlled, and characters Δ Pₜₕ₁ designate a set value for determining the dropping rate.

At the next Step S-7, whether or not the clutch application control starting condition is satisfied is decided depending upon whether or not any of the following conditions is satisfied: that the vehicle speed (V) by the signal of the vehicle speed sensor Sn4 is not 0; that the throttle opening (θ) by the throttle sensor Sn1 is not 0; and that the brake switch Sn6 is OFF. If this answer is NO, the application state of the clutch C1 is detected at Step S-8. This detection is continued till a speed ratio (e) indicating the input/output revolution ratio of the torque converter exceeds a preset value (e1). If the release of the clutch C1 is confirmed, the routine advances to the in-neutral control sub-routine of the next Step S-9. This sub-routine is to control the signal pressure (Pₜₕ) so as to hold the clutch C1 in the state immediately before the start of application, although its detail is omitted. Here is repeated again the decision of the satisfaction of the clutch application control starting condition, as at Step S-7. So long as this decision does not hold, the in-neutral control sub-routine of Step S-9 is repeated to hold the neutral control state of the clutch C1.

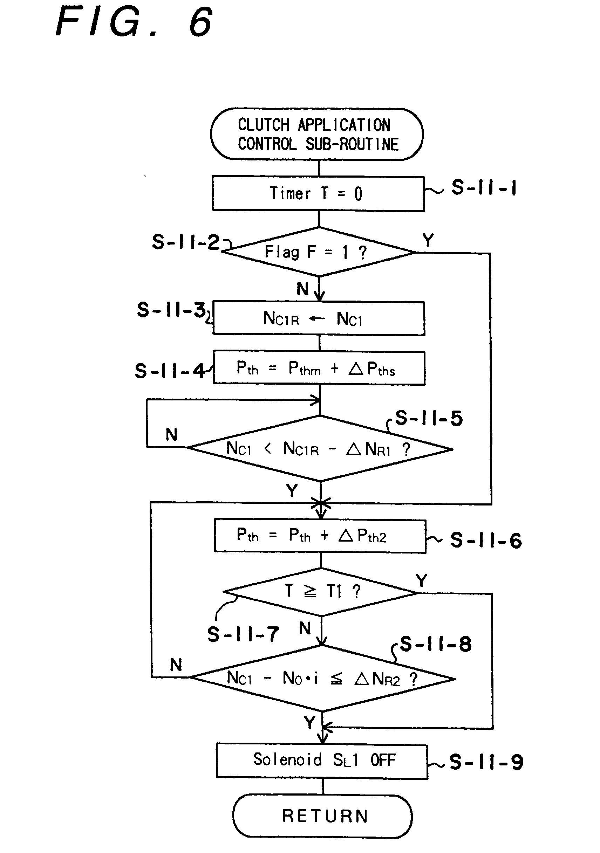

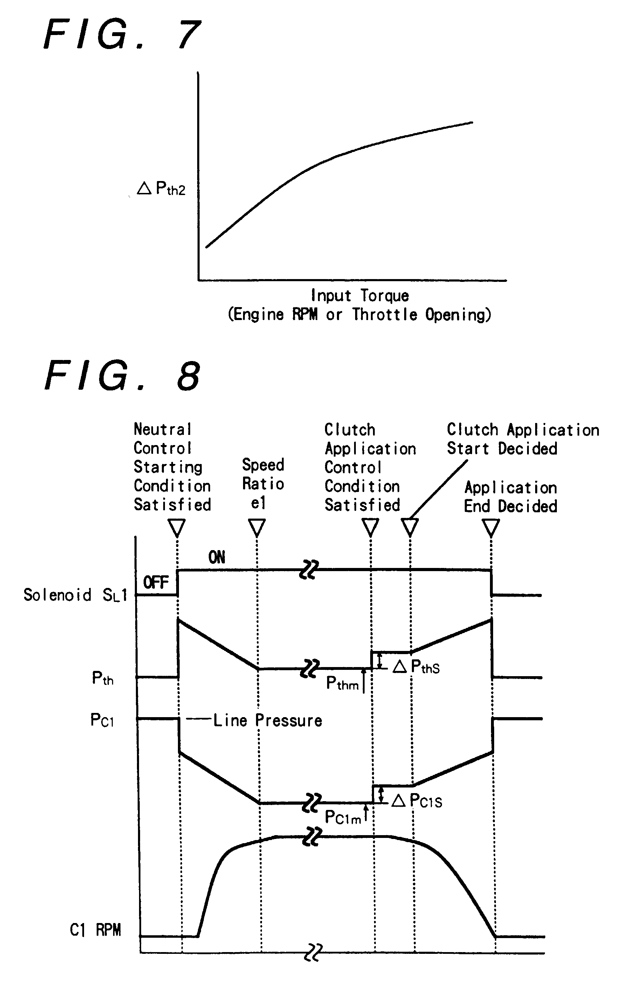

If the clutch application control starting condition is satisfied at Step S-7 or Step S-10 in the aforementioned main flow, the clutch application control sub-routine of Step S-11 according to the subject matter of the present invention is entered either after the flag has been set to F = 1 at Step S-12 for the holding of Step S-7 or directly for the holding of Step S-10. First of all, as shown in Fig. 6, a guard timer T is set at Step S-11-1, and the routine enters a flag decision at the next Step S-11-2. Here, the control mode is divided depending upon when the clutch application control starting condition in the previous main flow is satisfied. If this condition is satisfied at Step S-10, the flag setting at Step S-2 is F = 0 so that the answer of Step S-11-2 is NO. In this state, the clutch C1 is under the in-neutral control. At the next Step S-11-3, therefore, the clutch C1 RPM (N_{C1}) at this time is set as a clutch C1 RPM (N_{C1R}) at the holding time of the application control starting condition. At Step S-11-4, a signal pressure (Pₜₕₘ), as outputted in the in-neutral control for bringing the clutch C1 into a state immediately before it is applied, and an oil pressure (Δ P_{thS}), as set according to the input torque or the like for establishing a predetermined initial application state, are added to the signal pressure (Pₜₕ) at each time. At Step S-11-5, it is decided for starting the application whether or not the present clutch C1 RPM (N_{C1}) decreases more than a predetermined value (Δ N_{R1}) from the clutch C1 RPM (N_{C1R}). At the next Step S-11-6, the signal pressure (Pₜₕ) is increased by a predetermined amount (Δ Pₜₕ₂) so as to raise the oil pressure (P_{C1}) by a predetermined amount for each predetermined time period. At this time, as shown in Fig. 7, the predetermined amount (Δ Pₜₕ₂) is so set according to the input torque that it rises as the input torque increases. This input torque is detected in this embodiment in terms of the engine RPM (N_{E}) or the throttle opening (θ). At Step S-11-7, it is decided whether or not an initially set guard timer value exceeds a value T1. If this answer is NO, it is decided at Step S-11-8 that the control is ended, if the difference between the output RPM of the clutch C1 (No · i) (the RPM calculated by multiplying the output RPM No detected by the vehicle speed sensor Sn4 by the first speed gear ratio i) and the present input RPM (N_{C1}) of the clutch C1 is within a predetermined value (Δ N_{R2}), that is, if the clutch C1 is substantially applied. Finally, at Step S-11-9, the signal S_{L}1 to the solenoid valve 36 is turned OFF on the basis of that decision. As a result, the C-1 change-over valve 35 is switched to restore the direct feed state of the line pressure (P_{L}).

If, on the other hand, the clutch application control starting condition is satisfied at Step S-7 in the aforementioned main flow, the flag decision at Step S-11-2 is YES, so that the routine advances directly to the control at and after Step S-11-6 by skipping the controls of the preceding Step S-11-3 to -5. The subsequent controls are similar to the aforementioned ones.

The time charts, as obtained from the aforementioned flows, are illustrated in Figs. 8 and 9. Fig. 8 illustrates the case in which the flag setting is 0. As shown, the servo pressure (P_{C1}), as regulated by the throttle signal pressure (Pₜₕ), is lowered like the throttle signal pressure (Pₜₕ) at a predetermined reduction rate after the neutral control starting condition holds and before the speed ratio (e) becomes the predetermined value (e1). When the release of the clutch C1 is confirmed at the speed ratio e = e1, , the servo pressure (P_{C1}) is held at the constant servo pressure (P_{C1m}) by the control of the signal pressure (Pₜₕₘ) till the clutch application condition holds. When the clutch application condition is satisfied, the servo pressure (P_{C1}) is also held at a constant level (P_{C1m} + Δ P_{C1S}) which is increased by the augment (Δ P_{thS}) of the signal pressure (Pₜₕₘ) and is then raised at a predetermined rising rate, till the application end is decided when the clutch application start is decided.

In the case of the flag setting of 1, as shown in Fig. 9, the clutch application condition is satisfied till the speed ratio (e) shown in Fig. 8 takes the predetermined value (e1). At this instant, the servo pressure (P_{C1}) is instantly raised at a predetermined rising rate.

In short, according to the aforementioned embodiment, if the application state of the input clutch C1 in the case of the starting operation fails to reach the specific released state in which the piston 11 of the hydraulic servo C-1 starts its retraction, the piston 11 has ended the stroke for starting the engagement so that the application shock can be prevented without any abrupt application by raising the feed oil pressure (P_{C1}) from the oil pressure at that time on the basis of the predetermined rising characteristics to apply the input clutch C1. If the specific released state is reached, on the other hand, the summed oil pressure, which is prepared by adding the predetermined initial application pressure (Δ P_{C1S}) at the level for the piston 11 of the hydraulic servo C-1 to slide to start the application of the clutch C1 to the release oil pressure (P_{C1m}), is fed to effect the piston stroke reliably against the starting resistance and then to raise the oil pressure. As a result, the input clutch C1 can be quickly applied without any shock, as in the prior art. When the initial application oil pressure is to be fed, it is also possible to shorten the application time period and to prevent the application shock by raising the oil pressure after it has been confirmed in terms of the speed ratio (e) that the input clutch C1 comes into the predetermined application state. When the oil pressure is to be raised, it is further possible to control the application time and the application shock stably independently of the fluctuation of the input torque by detecting the input torque to the clutch C1, i.e., the output torque from the engine. Furthermore, it is possible to shorten the application time at the starting time by bringing the clutch C1 into the predetermined released state in which the piston 11 starts its retraction, that it, immediately before the clutch C1 starts its engagement.

Although the present invention has been described in detail on the basis of its embodiment, it can be practiced by changing the specific constructions of its details in various manners within the scope of the lain thereof.

According to the aforementioned construction of the present invention, if the application state of the input clutch in the case of the starting operation fails to reach the specific released state, i.e., the standby state in which the piston of the hydraulic servo starts its retraction, the piston has ended the stroke for starting the engagement so that the abrupt application and the application shock can be prevented by raising the feed oil pressure from the oil pressure at that time on the basis of the predetermined rising characteristics to apply the input clutch. If the specific released state or the standby state is reached, on the other hand, the summed oil pressure, which is prepared by adding the predetermined initial application pressure at the level for the piston of the hydraulic servo to slide to start the application of the clutch to the release oil pressure, is fed to effect the piston stroke reliably against the starting resistance and then to raise the oil pressure. As a result, the input clutch can be quickly applied without any shock, as in the prior art.

Especially according to the second aspect of the present invention, on the other hand, when the initial application oil pressure is to be fed, it is possible to shorten the application time period and to prevent the application shock, because the oil pressure is raised after it has been confirmed by the decide means that the input clutch comes into the predetermined application state.

Especially according to the third aspect of the present invention, on the other hand, when the oil pressure is to be raised, it is possible to control the application time and the application shock stably independently of the fluctuation of the input torque by detecting the input torque to the clutch, i.e., the output torque from the engine.

Especially according to the fourth aspect of the present invention, on the other hand, it is possible to shorten the application time at the starting time by bringing the clutch into the predetermined released state in which the piston 11 starts its retraction, that it, immediately before the clutch starts its engagement.

## Claims

1. A control system for an automatic transmission comprising:
an input clutch (C1) adapted to be applied, when a forward running range is selected, to transmit the rotation of an engine to a transmission mechanism;
a hydraulic servo (C-1) for applying/releasing the input clutch (C1) selectively;
stop state detecting means for detecting the stop state of a vehicle in terms of the selection of the forward running range, no vehicle speed, the release of an accelerator pedal and the depression of a brake pedal;
starting operation detecting means for detecting a starting operation;
application state detecting means for detecting the application state of said input clutch (C1); and
control means for controlling an oil pressure to be fed to said hydraulic servo (C-1) on the basis of signals coming from said stop state detecting means, said starting operation detecting means and said application state detecting means,
wherein said control means includes: release means for feeding, if the stop state of the vehicle is detected by the stop state detecting means, such a release oil pressure (P_{C1m}) to said hydraulic servo (C-1) as to lower the oil pressure of said hydraulic servo (C-1) gradually thereby to release said input clutch (C1) gradually and then to hold a predetermined released state; decide means for deciding, if the starting operation of the vehicle is detected by said starting operation detecting means, whether or not the release of said input clutch (C1) has arrived at such a specific released state or standby state that the piston (11) of said hydraulic servo (C-1) starts its retraction, on the basis of the signal detected by said application state detecting means; and apply means for feeding, if said decide means decides the arrival at the specific released state, said hydraulic servo (C-1) with the oil pressure, which is prepared by adding an initial application oil pressure (ΔP_{C1S}) at an level for the piston of said hydraulic servo (C-1) to slide to start the engagement of said input clutch (C1) to the release oil pressure (P_{C1m}) and then raising an oil pressure (P_{C1}) gradually from the summed oil pressure, and for raising, if said decide means decides a failure in the arrival at the specific released state, the oil pressure (P_{C1}) gradually from the oil pressure, which is fed to said hydraulic servo (C-1) when the starting operation is detected, on the basis of said predetermined rising characteristics.

2. A system according to claim 1,
wherein said apply means feeds, if said decide means decides the arrival at said specific released state, the summed oil pressure which is prepared by adding the initial application oil pressure (ΔP_{C1S}) for the piston (11) of said hydraulic servo (C-1) to slide thereby to start the application of said clutch (C-1), to said release oil pressure (P_{C1m}), and raises the oil pressure gradually from the initial application oil pressure (ΔP_{C1S}) on the basis of said predetermined rising characteristics, after such a predetermined application state for the piston of said hydraulic servo (C-1) to slide thereby to start the application of said clutch (C1) has been detected on the basis of the signal detected by said application state detecting means.

3. A system according to claim 1 or 2,
wherein said control means includes torque detecting means for detecting the output torque of said engine, and wherein said apply means raises the oil pressure gradually according to the predetermined rising characteristics based upon the torque detected by said torque detecting means.

4. A system according to claim 1, 2, or 3,
wherein said release means lowers the oil pressure of said hydraulic servo gradually to release said clutch (C1) gradually, if the stop state of the vehicle is detected on the basis of the signal coming from said stop state detecting means, and then feeds said hydraulic servo (C-1) with the release oil pressure capable of holding the predetermined released state for the piston (11) of said hydraulic servo (C-1) to start its retraction.

## Patentansprüche

1. Steuerungssystem für Automatikgetriebe mit:
einer Eingangskupplung (C1), die eingerückt wird, wenn ein Vorwärtsfahrbereich ausgewählt wird, um die Drehbewegung eines Motors zu einem Getriebemechanismus zu übertragen;
einer Hydraulik-Servoeinrichtung (C-1) zum selektiven Einrücken/Ausrücken der Eingangskupplung (C1);
einer Haltezustanderfassungseinrichtung zum Erfassen des Haltezustands eines Fahrzeugs, der vorliegt, wenn der Vorwärtsfahrbereich des Fahrzeugs ausgewählt ist, die Fahrzeuggeschwindigkeit null beträgt, ein Beschleunigungspedal freigegeben ist und ein Bremspedal betätigt ist;
einer Anfahrvorgangerfassungseinrichtung zum Erfassen eines Anfahrvorgangs;
einer Einrückzustanderfassungseinrichtung zum Erfassen eines eingerückten Zustands der Eingangskupplung (C1); und
einer Steuerungseinrichtung zum Steuern eines der Hydraulik-Servoeinrichtung (C-1) zuzuführenden Öldrucks auf der Basis von Signalen von der Haltezustanderfassungseinrichtung, der Anfahrvorgangerfassungseinrichtung und der Einrückzustanderfassungseinrichtung;
wobei die Steuerungseinrichtung aufweist:
eine Freigabeeinrichtung, die, wenn durch die Haltezustanderfassungseinrichtung der Haltezustand des Fahrzeugs erfaßt wird, der Hydraulik-Servoeinrichtung (C-1) einen Freigabeöldruck (P_{C1m}) zuführt, so daß der Öldruck der Hydraulik-Servoeinrichtung (C-1) allmählich vermindert wird, um die Eingangskupplung (C1) allmählich auszurücken und dann einen vorgegebenen Freigabezustand zu halten;
eine Entscheidungseinrichtung, die, wenn durch die Anfahrvorgangerfassungseinrichtung der Anfahrvorgang des Fahrzeugs erfaßt wird, auf der Basis des durch die Einrückzustanderfassungseinrichtung erfaßten Signals entscheidet, ob während des Ausrückens der Eingangskupplung (C1) ein bestimmter Freigabe- oder Bereitschaftszustand erreicht wurde oder nicht, in dem der Kolben (11) der Hydraulik-Servoeinrichtung (C-1) beginnt sich zurückzuziehen; und
eine Einrückeinrichtung, die, wenn die Entscheidungseinrichtung entscheidet, daß der bestimmte Freigabezustand erreicht ist, der Hydraulik-Servoeinrichtung (C-1) den Öldruck zuführt, der durch Addieren eines Anfangsöldrucks (ΔP_{C1S}), bei dem der Kolben der Hydraulik-Servoeinrichtung (C-1) verschoben wird, wodurch die Eingangskupplung (C1) beginnt einzurücken, zum Freigabeöldruck (P_{C1m}) erhalten wird, und dann einen Öldruck (P_{C1}) ausgehend vom addierten Öldruck allmählich erhöht, und die, wenn die Entscheidungseinrichtung entscheidet, daß der bestimmte Freigabezustand nicht erreicht ist, den Öldruck (P_{C1}) ausgehend von dem Öldruck, der der Hydraulik-Servoeinrichtung (C-1) zugeführt wird, wenn der Anfahrvorgang erfaßt wird, auf der Basis der vorgegebenen Anstiegscharakteristik allmählich erhöht.

2. Steuerungssystem nach Anspruch 1,
wobei die Einrückeinrichtung, wenn die Entscheidungseinrichtung entscheidet, daß der bestimmte Freigabezustand erreicht ist, den addierten Öldruck, der durch Addieren des Anfangsöldrucks (ΔP_{C1S}), bei dem der Kolben (11) der Hydraulik-Servoeinrichtung (C-1) verschoben wird, wodurch die Kupplung (C1) beginnt einzurücken, zum Freigabeöldruck (P_{C1m}) erhalten wird, zuführt und den Öldruck ausgehend vom Anfangsöldruck (ΔP_{C1S}) auf der Basis der vorgegebenen Anstiegscharakteristik allmählich erhöht, nachdem ein vorgegebener Einrückzustand, bei dem der Kolben der Hydraulik-Servoeinrichtung (C-1) verschoben wird, wodurch die Kupplung (C1) beginnt einzurücken, auf der Basis des durch die Einrückzustanderfassungseinrichtung erfaßten Signals erfaßt wurde.

3. Steuerungssystem nach Anspruch 1 oder 2,
wobei die Steuerungseinrichtung eine Drehmomenterfassungseinrichtung zum Erfassen des Ausgangsdrehmoments des Motors aufweist, und wobei die Einrückeinrichtung den Öldruck gemäß der vorgegebenen Anstiegscharakteristik basierend auf dem durch die Drehmomenterfassungseinrichtung erfaßten Drehmoment allmählich erhöht.

4. Steuerungssystem nach Anspruch 1, 2 oder 3,
wobei die Freigabeeinrichtung den Öldruck der Hydraulik-Servoeinrichtung allmählich vermindert, um die Kupplung (C1) allmählich auszurücken, wenn der Haltezustand des Fahrzeugs auf der Basis des Signals von der Haltezustanderfassungseinrichtung erfaßt wird, und dann der Hydraulik-Servoeinrichtung (C-1) den Freigabeöldruck zuführt, durch den der bestimmte Freigabezustand gehalten werden kann, bei dem der Kolben (11) der Hydraulik-Servoeinrichtung (C-1) beginnt sich zurückzuziehen.

## Revendications

1. Système de commande pour une transmission automatique, comprenant :
un embrayage d'entrée (C1) adapté de façon à être appliqué, lorsqu'une plage de marche avant est sélectionnée, pour transmettre la rotation d'un moteur à un mécanisme de transmission;
un dispositif asservi hydraulique (C-1) servant à appliquer/libérer l'embrayage d'entrée (C1) sélectivement;
des moyens de détection d'état d'arrêt pour détecter l'état d'arrêt d'un véhicule en termes de sélection de la plage de marche avant, d'absence de vitesse de véhicule, de libération d'une pédale d'accélérateur et d'enfoncement d'une pédale de frein;
des moyens de détection d'opération de démarrage, pour détecter une opération de démarrage;
des moyens de détection d'état d'application, pour détecter l'état d'application dudit embrayage d'entrée (C1), et
des moyens de commande pour commander une pression d'huile devant être fournie audit dispositif asservi hydraulique (C-1) sur la base de signaux provenant desdits moyens de détection d'état d'arrêt, desdits moyens de détection d'opération de démarrage et desdits moyens de détection d'état d'application,
dans lequel lesdits moyens de commande comprennent : des moyens de libération pour amener, si l'état d'arrêt du véhicule est détecté par lesdits moyens de détection d'état d'arrêt, une pression d'huile de libération (P_{C1m}) audit dispositif asservi hydraulique (C-1), permettant de réduire graduellement la pression d'huile dudit dispositif asservi hydraulique (C-1), pour libérer de ce fait ledit embrayage d'entrée (C1) graduellement et pour maintenir alors un état libéré prédéterminé; des moyens de décision pour décider, si l'opération de démarrage du véhicule est détectée par lesdits moyens de détection d'opération de démarrage, si la libération dudit embrayage d'entrée (C1) est arrivée à un état libéré spécifique ou bien un état d'attente tel que le piston (11) dudit dispositif asservi hydraulique (C-1) commence sa rétraction, d'après le signal détecté par lesdits moyens de détection d'état d'application ; et des moyens d'application pour amener, si lesdits moyens de décision décident l'arrivée à l'état libéré spécifique, la pression d'huile audit dispositif asservi hydraulique (C-1) qui est préparée en ajoutant une pression d'huile d'application initiale (ΔP_{C1S}) à un niveau permettant que le piston dudit dispositif asservi hydraulique (C-1) coulisse afin de démarrer l'engagement dudit embrayage d'entrée (C1) vers la pression d'huile de libération (P_{C1m}), et l'augmentation ensuite graduelle d'une pression d'huile (Pci) depuis la pression d'huile additionnée, et pour, si lesdits moyens de décision décident une défaillance de l'arrivée à l'état libéré spécifique, augmenter de façon graduelle la pression d'huile (P_{C1}) depuis la pression d'huile, qui est amenée audit dispositif asservi hydraulique (C-1) lorsque l'opération de démarrage est détectée, d'après lesdites caractéristiques d'augmentation prédéterminées.

2. Système selon la revendication 1, dans lequel lesdits moyens d'application, si lesdits moyens de décision décident l'arrivée audit état libéré spécifique, amènent la pression d'huile additionnée qui est préparée par addition de la pression d'huile d'application initiale (ΔP_{C1S}) pour le piston (11) dudit dispositif asservi hydraulique (C-1), pour coulisser de ce fait afin de démarrer l'application dudit embrayage (C1), vers ladite pression d'huile de libération (P_{C1m}), et augmente graduellement la pression d'huile depuis la pression d'huile d'application initiale (P_{C1S}) d'après lesdites caractéristiques d'augmentation prédéterminées, après qu'un tel état d'application prédéterminé pour que le piston dudit dispositif asservi hydraulique (C-1) coulisse de ce fait pour démarrer l'application dudit embrayage (C1) a été détecté, sur la base du signal détecté par ledit moyen de détection d'état d'application.

3. Système selon la revendication 1 ou 2, dans lequel lesdits moyens de commande comprennent des moyens de mesure de couple servant à mesurer le couple de sortie dudit moteur, et dans lequel lesdits moyens d'application augmentent graduellement la pression d'huile selon les caractéristiques d'augmentation prédéterminées, d'après le couple mesuré par lesdits moyens de mesure de couple.

4. Système selon la revendication 1, 2 ou 3, dans lequel lesdits moyens de libération réduisent graduellement la pression d'huile du dispositif asservi hydraulique pour libérer graduellement ledit embrayage (C1), si l'état d'arrêt du véhicule est détecté d'après le signal provenant desdits moyens de détection d'état d'arrêt, et amènent ensuite audit dispositif asservi hydraulique (C-1) la pression d'huile de libération pouvant maintenir l'état libéré prédéterminé pour que le piston (11) dudit dispositif asservi hydraulique (C-1) commence sa rétraction.
